# EUROPEAN PATENT APPLICATION

(11) **EP 4 156 343 A1**
(43) Date of publication of application: **29.03.2023**
(21) Application number: 21807534.9
(22) Date of filing: 20.05.2021
(51) Int. Cl.: H01M 4/66, H01M 4/80, H01M 10/0525

(54) **ELECTRODE PLATE, CELL, AND BATTERY**

(30) Priority: 22.05.2020 CN 202010442253
(71) Applicant: Jiangsu Zenergy Battery Technologies Co., Ltd., Suzhou City, Jiangsu 215500 (CN)
(72) Inventor: WANG, Rui, Dongguan, Guangdong 523000 (CN); YU, Hongjiang, Dongguan, Guangdong 523000 (CN); ZOU, Wuyuan, Dongguan, Guangdong 523000 (CN); JIANG, Bin, Dongguan, Guangdong 523000 (CN); LONG, Huijin, Dongguan, Guangdong 523000 (CN)
(74) Representative: Vitina, Maruta
(86) International application number: PCT/CN2021/094787
(87) International publication number: WO 2021/233366

(57) **Abstract**

Disclosed are a pole plate, cell, and battery. The pole plate includes a current collector and a coating layer formed on at least one surface of the current collector. The coating layer includes a first coating zone and a second coating zone arranged on two sides of the first coating zone. A compaction density of the second coating zone is larger than that of the first coating zone. Since the first coating zone with a lower compaction density is provided at the middle region of the pole plate, the middle region of a cell can store more electrolyte, such that the local electrolyte shortage will not occur when the middle region of the cell is squeezed under expansion, thereby improving the cycle performance of the cell and battery.

## Description

### CROSS-REFERENCE TO RELATED APPLICATIONS

This application which claims the benefit of priority from Chinese Patent Application No. 202010442253.X, titled "Pole Plate, Cell, and Battery" and filed on May 22, 2020. The content of the aforementioned application, including any intervening amendments thereto, is incorporated herein by reference in its entirety.

### TECHNICAL FIELD

This application relates to lithium-ion battery, and more particularly to a pole plate, cell, and battery.

### BACKGROUND

With the popularization of electric vehicles and the improvement of range, hard-cased battery cells with optimal pack design usage and high reliability are becoming more and more popular in the market.

Currently, the anode plate of a square lithium-ion battery is usually made from graphite or a mixture of graphite and silicon or silicon oxide. During the charging and discharging process, the anode material will expand and contract due to the intercalation/adsorption of lithium ions, resulting in changes in the thickness of the pole plate, (namely, the pole plate will be thickened during charging and thinned during discharging). In view of the expansion and contraction of the pole plate during charging and discharging, a gap is usually reserved between the shell and the cell of the square lithium-ion battery in the direction of the compaction density during the design stage, which can prevent the battery cell from being over-squeezed in the case of the expansion of the pole plate, so as to avoid the local electrolyte shortage after the lithium-ion batteries are packed. The electrolyte shortage will cause a rapid decline in the cycle performance of the cell, and more seriously pose the local lithium precipitation. In particular, the cell center is most prone to electrolyte shortage due to the weakest liquid absorption ability.

At present, the energy density of the square lithium-ion battery is continuously growing, and in view of this, the gap between the shell and the cell of the square lithium-ion battery in the direction of compaction density becomes smaller and smaller, which will further shorten the cycle life of the cell and pos a greater safety hazard.

### SUMMARY

To overcome the deficiency in the prior art, this disclosure provides a pole plate, cell, and battery.

The technical solutions of the disclosure are described below.

In a first aspect, the disclosure provides a pole plate, comprising:
a current collector; and
a coating layer provided on at least one surface of the current collector;
wherein the coating layer comprises a first coating zone and a second coating zone; the second coating zone is arranged on two sides of the first coating zone; and a compaction density of the second coating zone is larger than a compaction density of the first coating zone.

In an embodiment, a ratio of the compaction density of the first coating zone to the compaction density of the second coating zone is 1:(1.001-1.5).

In an embodiment, the second coating zone arranged on at least one of the two sides of the first coating zone comprises a plurality of sub-coating zones varying in compaction density; and for any two adjacent sub-coating zones, a compaction density of one sub-coating zone closer to the first coating zone is smaller than that of the other sub-coating zone.

In an embodiment, the second coating zone arranged on at least one of the two sides of the first coating zone comprises a plurality of first sub-coating zones and a plurality of second sub-coating zones; a compaction density of the plurality of first sub-coating zones is different from that of the plurality of second sub-coating zones; and the plurality of first sub-coating zones and the plurality of second sub-coating zones are alternately arranged. wherein the plurality of first sub-coating zones have a larger compaction density than an average compaction density of the second coating zone, and the plurality of second sub-coating zones have a lower compaction density than the average compaction density of the second coating zone

In an embodiment, a width of the first coating zone is 5-95% of a total width of the coating layer. When the compaction density of the first coating zone is too small, the percentage of the small-porosity zone in the coating layer is too low, so the coating layer fails to store sufficient electrolytes. In this way, when the cell is squeezed due to the expansion, it cannot retain enough electrolytes, thus causing the local lack of electrolytes and failing to play a role in improving the cycle performance of the cell. Whereas, when the compaction density of the first coating area is too large, the energy density of the battery will be reduced, thus affecting other performances of the battery.

In an embodiment, the compaction densities of the first coating zone and the second coating zone are 0.9-4.7 g/cm ³ and 1.0-4.8 g/cm³, respectively. As long as the compaction density of the first coating zone is less than that of the second coating zone, and the pole plate has a small porosity and a sufficient liquid storage capacity, the compaction densities of the first coating zone and the second coating zone can be adjusted according to the materials contained in the coating material. Specifically, for the cathode plate of a ternary battery, the compaction density of the first coating zone is 2.9-4.7 g/cm³, and the compaction density of the second coating zone is 3.0-4.8 g/cm³; for the cathode plate of a lithium cobalt oxide battery, the compaction density of the first coating zone is 3.2-5.0 g/cm³, and the compaction density of the second coating zone is 3.3-5.1 g/cm³; for the cathode plate of a lithium iron phosphate battery, the compaction density of the first coating zone is 2.9-4.1 g/cm³, and the compaction density of the second coating zone is 3.0-4.2 g/cm³; for the cathode plate of a lithium manganate battery, the compaction density of the first coating zone is 1.9-3.5 g/cm³, and the compaction density of the second coating zone is 2.0-3.6 g/cm³; for the graphite anode plate, the compaction density of the first coating zone is 1.0-1.7 g/cm³, and the compaction density of the second coating zone is 1.1-1.8 g/cm³; for the graphite-silicon/silicon oxide anode plate, the compaction density of the first coating zone is 0.9-1.7 g/cm³, and the compaction density of the second coating zone is 1.0-1.8 g/cm³; for the anode plate of a lithium titanium oxide battery, the compaction density of the first coating zone is 1.3-3.0 g/cm³, and the compaction density of the second coating zone is 1.4-3.1 g/cm³.

In a second aspect, the present disclosure provides a cell, comprising a cathode plate, an anode plate, and a separator arranged between the cathode plate and the anode plate, wherein at least one of the cathode plate and the anode plate is the aforementioned pole plate.

In an embodiment, the separator comprises a substrate and a functional coating layer formed on at least one surface of the substrate; the functional coating layer comprises a coating zone *a* and a coating zone *b*; the coating zone *b* is arranged on two sides of the coating zone *a*; and a compaction density of the coating zone *b* is larger than that of the coating zone *a*. When the separator also adopts the same design as the pole plate, the liquid storage capacity of the cell is better, which can further improve the cycle performance of the cell.

In an embodiment, the cell is a wound cell or a laminated cell.

In a third aspect, this application provides a battery, comprising:
a casing; and
the aforementioned cell;
wherein the cell is packaged in the casing.

This application has the following beneficial effects compared with the prior art.
(1) This application provides a pole plate including a current collector, and a coating layer formed on at least one surface of the current collector, where the coating layer includes a first coating zone and a second coating zone arranged on two sides of the first coating zone; and a compaction density of the second coating zone is larger than that of the first coating zone, that is, the middle region of the coating layer has a smaller compaction density and a higher porosity, which facilitates the storage of electrolytes, thus overcoming the cycle performance degradation of the battery caused by the extrusion of electrolytes under the excessive expansion force.
(2) This application provides a cell including the above-mentioned pole plate, in which the local electrolyte shortage will not occur even if the electrolytes are partially squeezed out due to the expansion of the middle region of the cell, thereby improving the cycle life of the cell and avoiding the local lithium precipitation.
(3) This application also provides a battery including the above-mentioned cell, which has a prolonged cycle life.

### BRIEF DESCRIPTION OF THE DRAWINGS

Fig. 1 is a structural diagram of a pole plate according to an embodiment of the present disclosure;
Fig. 2 is a structural diagram of the pole plate according to another embodiment of the present disclosure;
Fig. 3 is a structural diagram of the pole plate according to another embodiment of the present disclosure; and
Fig. 4 shows a comparison between lithium-ion batteries prepared in Example 1 and a comparative example in cycle performance.

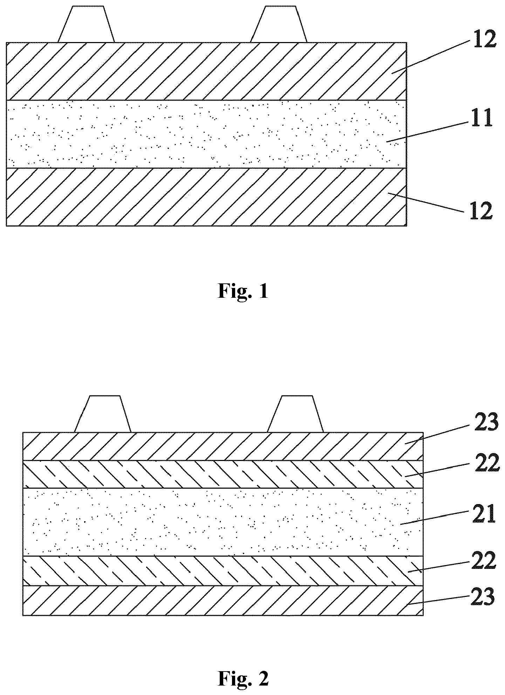

Fig. 1: 11, first coating zone; and 12, second coating zone;
Fig. 2: 21, first coating zone; 22, first sub-coating zone; 23, second sub-coating zone; and

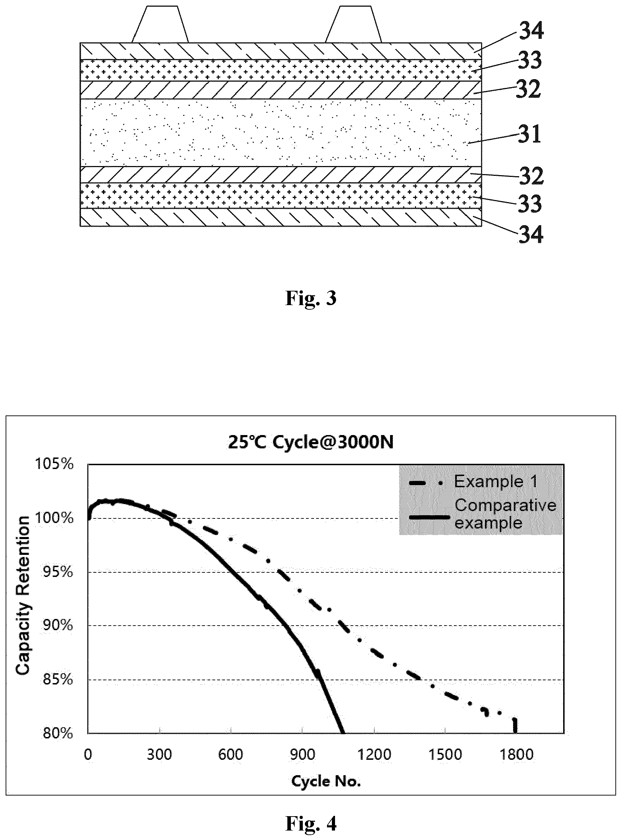

Fig. 3: 31, first coating zone; 32, first sub-coating zone; 33, second sub-coating zone; and 34, third sub-coating zone.

### DETAILED DESCRIPTION OF EMBODIMENTS

The technical solutions of the present application will be clearly and completely described below with reference to the embodiments and the accompanying drawings, but this application is not limited thereto.

An embodiment illustrated in Fig. 1 provides a pole plate, which includes a current collector and a coating layer formed on at least one surface of the current collector. The coating layer includes a first coating zone 11 and a second coating zone 12 arranged on two sides of the first coating zone 11, where a compaction density of the second coating zone 12 is larger than that of the first coating zone 11.

In an embodiment, a ratio of the compaction density of the first coating zone to that of the second coating zone is 1:(1.001-1.5).

In an embodiment, a width of the first coating zone 11 is 5-95% of a total width of the coating layer.

In an embodiment, the compaction densities of the first coating zone 11 and the second coating zone 12 are 0.9-4.7 g/cm ³ and 1.0-4.8 g/cm³, respectively. As long as the compaction density of the first coating zone 11 is less than that of the second coating zone 12, and the pole plate has a small porosity and a sufficient liquid storage capacity, the compaction densities of the first coating zone 11 and the second coating zone 12 can be adjusted according to the coating material. Specifically, for the cathode plate of a ternary polymer lithium battery, the compaction density of the first coating zone 11 is 2.9-4.7 g/cm³, and the compaction density of the second coating zone 12 is 3.0-4.8 g/cm³; for the cathode plate of a lithium cobalt oxide battery, the compaction density of the first coating zone 11 is 3.2-5.0 g/cm³, and the compaction density of the second coating zone 12 is 3.3-5.1 g/cm³; for the cathode plate of a lithium iron phosphate battery, the compaction density of the first coating zone 11 is 2.9-4.1 g/cm³, and the compaction density of the second coating zone 12 is 3.0-4.2 g/cm³; for the cathode plate of a lithium manganate battery, the compaction density of the first coating zone 11 is 1.9-3.5 g/cm³, and the compaction density of the second coating zone 12 is 2.0-3.6 g/cm³; for the graphite anode plate, the compaction density of the first coating zone 11 is 1.0-1.7 g/cm³, and the compaction density of the second coating zone 12 is 1.1-1.8 g/cm³; for the graphite-silicon/silicon oxide anode plate, the compaction density of the first coating zone 11 is 0.9-1.7 g/cm³, and the compaction density of the second coating zone 12 is 1.0-1.8 g/cm³; and for the anode plate of a lithium titanium oxide battery, the compaction density of the first coating zone 11 is 1.3-3.0 g/cm³, and the compaction density of the second coating zone 12 is 1.4-3.1 g/cm³.

Referring to an embodiment illustrated in Fig. 2, a pole plate includes a current collector and a coating layer formed on at least one surface of the current collector. The coating layer includes a first coating zone 21 and a second coating zone arranged on two sides of the first coating zone 21, where the second coating zone includes a first sub-coating zone 22 and a second sub-coating zone 23. The compaction densities of the first sub-coating zone 22 and the second sub-coating zone 23 are both larger than the compaction density of the first coating zone 21, and the compaction density of the second sub-coating zone 23 is larger than that of the first sub-coating zone 22. It should be noted that the number of the sub-coating zones on each side of the first coating zone can also be set to more than two, and the sub-coating zone closer to the first coating zone 21 has a lower compaction density.

In an embodiment, a ratio of the compaction density of the first coating zone 21 to that of the first sub-coating zone 22 or the second sub-coating zone 23 is 1:(1.001-1.5).

In an embodiment, a width of the first coating zone 21 is 5-95% of that of the coating layer.

In an embodiment, the compaction density of the first coating zone 21 is 0.9-4.7 g/cm³, and compaction densities of the first sub-coating zone 22 and the second sub-coating zone 23 are 1.0-4.8 g/cm³. As long as the compaction density of the first coating zone 21 is less than that of the first and second sub-coating zones (22 and 23), and the pole plate has a small porosity and a sufficient liquid storage capacity, the compaction densities of the first coating zone 21 and the sub-coating zones (22 and 23) can be adjusted according to the coating material. Specifically, for the cathode plate of a ternary polymer lithium battery, the compaction density of the first coating zone 21 is 2.9-4.7 g/cm³, and the compaction density of the first and second sub-coating zones (22 and 23) is 3.0-4.8 g/cm³; for the cathode plate of a lithium cobalt oxide battery, the compaction density of the first coating zone 21 is 3.2-5.0 g/cm³, and the compaction density of the sub-coating zones (22 and 23) is 3.3-5.1 g/cm³; for the cathode plate of a lithium iron phosphate battery, the compaction density of the first coating zone 21 is 2.9-4.1 g/cm³, and the compaction density of the sub-coating zones (22 and 23) is 3.0-4.2 g/cm³; for the cathode plate of a lithium manganate battery, the compaction density of the first coating zone 21 is 1.9-3.5 g/cm³, and the compaction density of the sub-coating zones (22 and 23) is 2.0-3.6 g/cm³; for the graphite anode plate, the compaction density of the first coating zone 21 is 1.0-1.7 g/cm³, and the compaction density of the sub-coating zones (22 and 23) is 1.1-1.8 g/cm³; for the graphite-silicon/silicon oxide anode plate, the compaction density of the first coating zone 21 is 0.9-1.7 g/cm³, and the compaction density of the sub-coating zones (22 and 23) is 1.0-1.8 g/cm³; for the anode plate of a lithium titanium oxide battery, the compaction density of the first coating zone 21 is 1.3-3.0 g/cm³, and the compaction density of the first sub-coating zone 22/23 is 1.4-3.1 g/cm³.

An embodiment illustrated in Fig. 3 provides a pole plate, which includes a current collector and a coating layer formed on at least one surface of the current collector. The coating layer includes a first coating zone 31 and a second coating zone arranged on two sides of the first coating zone 31. The second coating zone includes a first sub-coating zone 32, a second sub-coating zone 33, and a third sub-coating zone 34. The compaction densities of the sub-coating zones (32-34) are larger than the compaction density of the first coating zone 31, and the compaction densities of the first sub-coating zone 32 and the third sub-coating zone 34 are smaller than that of the second sub-coating zone 33, or the compaction densities of the first sub-coating zone 32 and the third sub-coating zone 34 are larger than that of the second sub-coating zone 33.

In an embodiment, a ratio of the compaction density of the first coating zone 31 to that of the sub-coating zones (32-34) is 1:(1.001-1.5).

In an embodiment, a width of the first coating zone 31 is 5-95% of that of the coating layer.

In an embodiment, the compaction density of the first coating zone 31 is 0.9-4.7 g/cm³, and compaction densities of the sub-coating zones (32-34) are 1.0-4.8 g/cm³. As long as the compaction density of the first coating zone 31 is less than that of the sub-coating zones (32-34), and the pole plate has a small porosity and a sufficient liquid storage capacity, the compaction densities of the first coating zone 31 and the sub-coating zones (32-34) can be adjusted according to the coating material. Specifically, for the cathode plate of a ternary battery, the compaction density of the first coating zone 31 is 2.9-4.7 g/cm³, and the compaction density of the sub-coating zones (32-34) is 3.0-4.8 g/cm³; for the cathode plate of a lithium cobalt oxide battery, the compaction density of the first coating zone 31 is 3.2-5.0 g/cm³, and the compaction density of the sub-coating zones (32-34) is 3.3-5.1 g/cm³; for the cathode plate of a lithium iron phosphate battery, the compaction density of the first coating zone 31 is 2.9-4.1 g/cm³, and the compaction density of the sub-coating zones (32-34) is 3.0-4.2 g/cm³; for the cathode plate of a lithium manganate battery, the compaction density of the first coating zone 31 is 1.9-3.5 g/cm³, and the compaction density of the sub-coating zones (32-34) is 2.0-3.6 g/cm³; for the graphite anode plate, the compaction density of the first coating zone 31 is 1.0-1.7 g/cm³, and the compaction density of the sub-coating zones (32-34) is 1.1-1.8 g/cm³; for the graphite-silicon/silicon oxide anode plate, the compaction density of the first coating zone 31 is 0.9-1.7 g/cm³, and the compaction density of the sub-coating zones (32-34) is 1.0-1.8 g/cm³; and for the anode plate of a lithium titanium oxide battery, the compaction density of the first coating zone 31 is 1.3-3.0 g/cm³, and the compaction density of the sub-coating zones (32-34) is 1.4-3.1 g/cm³.

The present disclosure will be described in detail below with reference to the embodiments and accompanying drawings, but these embodiments are not intended to limit this application.

### Example 1

### Preparation of a cathode plate

(S1) A ternary material (the positive active material), carbon black (the conductive agent) and polyvinylidene fluoride (PVDF) (the binder) were mixed in a weight ratio of 96:2.5:1.5 in N-methyl pyrrolidone (NMP) (the solvent) under stirring to form a cathode plate slurry with a solid content of 70%.

(S2) The cathode plate slurry was continuously coated onto the surface of a cathode plate current collector (aluminum foil) having a thickness of 12 µm to form a coating layer with the help of an extrusion coating machine with the extrusion head gap adjusted in advance. As shown in Fig. 1, the film coating included the first coating zone 11 and the second coating zone 12 located on two sides of the first coating zone 11, where the compaction densities of the first coating zone 11 and the second coating zone 12 were 3.8 g/cm³ and 4.0 g/cm³, respectively. The total width of the coating layer was 160 mm, where the width of the first coating zone 11 was 60 mm, and the width of the second coating zone 12 at each side of the first coating zone 11 was 50 mm.

(S3) The cathode plate current collector coated with the coating layer was subjected to drying, rolling, die-cutting, and slitting to obtain the cathode plate.

### Preparation of an anode plate

(S1) Graphite (the negative active material), styrene-butadiene rubber (the binder), carbon black (the conductive agent), and sodium carboxymethyl cellulose (CMC-Na) (the dispersing agent) were mixed in a weight ratio of 96:1.5:1.5:1 in distilled water under stirring to form an anode plate slurry with a solid content of 45%.

(S2) The anode plate slurry was coated on the surface of an anode plate current collector (copper foil) having a thickness of 6 µm to form a coating layer having a width of 200 mm and a compaction density of 1.5 g/cm³.

(S3) The anode plate current collector coated with the coating layer was subjected to drying, rolling, die-cutting, and slitting to obtain the anode plate.

### Fabrication of a lithium-ion battery

(S1) The cathode plate, the anode plate, and a separator were wound into a cell in a manner of "anode plate-separator-cathode plate-separator".

(S2) The cell was hot-pressed, and assembled and welded with a top cover to complete the cell assembly. After that, the cell was subjected to electrolyte injection, formation, air discharge, and sealing to obtain the lithium-ion battery.

### Example 2

### Preparation of a cathode plate

(S1) A ternary material (the positive active material), carbon black (the conductive agent) and polyvinylidene fluoride (PVDF) (the binder) were mixed in a weight ratio of 97:1.5:1.5 in N-methyl pyrrolidone (NMP) (the solvent) under stirring to form a cathode plate slurry with a solid content of 70%.

(S2) The cathode plate slurry was continuously coated onto the surface of a cathode plate collector (aluminum foil) having a thickness of 12 µm to form a coating layer with a width of 160 mm and a compaction density of 4.0 g/cm³.

(S3) The cathode plate collector coated with the coating layer was subjected to drying, rolling, die-cutting, and slitting to obtain the cathode plate.

### Preparation of an anode plate

(S1) Graphite (the negative active material), styrene-butadiene rubber (the binder), carbon black (the conductive agent), and sodium carboxymethyl cellulose (CMC-Na) (the dispersing agent) were mixed in a weight ratio of 96.5:1.5:1: in distilled water under stirring to form an anode plate slurry with a solid content of 45%.

(S2) The anode plate slurry was continuously coated onto the surface of the anode plate current collector (copper foil) having a thickness of 6 µm to form a coating layer with the help of an extrusion coating machine with the extrusion head gap adjusted in advance. As shown in Fig. 2, the film coating included the first coating zone 21 and the second coating zone located on two sides of the first coating zone 21. The second coating zone included a first sub-coating zone 22 and a second sub-coating zone 23. The compaction densities of the first coating zone 21, the first sub-coating zone 22, and the second sub-coating zone 23 were 1.3 g/cm³, 1.4 g/cm³, 1.5 g/cm³, respectively. The total width of the coating layer was 200 mm, where the widths of the first coating zone 21 the first sub-coating zone 22, and the second sub-coating zone 23 were 80 mm, 30 mm, and 30 mm respectively.

(S3) The anode plate current collector coated with the coating layer was subjected to drying, rolling, die-cutting, and slitting to obtain the anode plate.

### Fabrication of a lithium-ion battery

(S1) The cathode plate, the anode plate, and a separator were wound into a cell in a manner of "anode plate-separator-cathode plate-separator".

(S2) The cell was hot-pressed, and assembled and welded with a top cover to complete the cell assembly. After that, the cell was subjected to electrolyte injection, formation, air discharge, and sealing to obtain the lithium-ion battery.

### Example 3

### Preparation of a cathode plate

(S1) A ternary material (the positive active material), carbon black (the conductive agent) and polyvinylidene fluoride (PVDF) (the binder) were mixed in a weight ratio of 96:2.5:1.5 in N-methyl pyrrolidone (NMP) (the solvent) under stirring to form a cathode plate slurry with a solid content of 70%.

(S2) The cathode plate slurry was continuously coated onto the surface of a cathode plate current collector (aluminum foil) having a thickness of 12 µm to form a coating layer with the help of an extrusion coating machine with the extrusion head gap adjusted in advance. As shown in Fig. 1, the film coating included the first coating zone 11 and the second coating zone 12 located on two sides of the first coating zone 11, where the compaction densities of the first coating zone 11 and the second coating zone 12 were 3.8 g/cm³ and 4.0 g/cm³, respectively. The total width of the coating layer was 160 mm, where the width of the first coating zone 11 was 60 mm, and the width of the second coating zone 12 at each side of the first coating zone 11 was 50 mm.

(S3) The cathode plate current collector coated with the coating layer was subjected to drying, rolling, die-cutting, and slitting to obtain the cathode plate.

### Preparation of an anode plate

(S1) Graphite (the negative active material), styrene-butadiene rubber (the binder), carbon black (the conductive agent), and sodium carboxymethyl cellulose (CMC-Na) (the dispersing agent) were mixed in a weight ratio of 96.5:1.5:1:1 in distilled water under stirring to form an anode plate slurry with a solid content of 45%.

(S2) The anode plate slurry was continuously coated onto the surface of the anode plate current collector (copper foil) having a thickness of 6 µm to form a coating layer with the help of an extrusion coating machine with the extrusion head gap adjusted in advance. As shown in Fig. 2, the film coating included the first coating zone 21 and the second coating zone located on two sides of the first coating zone 21. The second coating zone included a first sub-coating zone 22 and a second sub-coating zone 23. The compaction densities of the first coating zone 21, the first sub-coating zone 22, and the second sub-coating zone 23 were 1.3 g/cm³, 1.4 g/cm³, and 1.5 g/cm³, respectively. The total width of the coating layer was 200 mm, where the widths of the first coating zone 21 the first sub-coating zone 22, and the second sub-coating zone 23 were 80 mm, 30 mm, and 30 mm respectively.

(S3) The anode plate collector coated with the coating layer was subjected to drying, rolling, die-cutting, and slitting to obtain the anode plate.

### Fabrication of a lithium-ion battery

(S1) The cathode plate, the anode plate, and a separator were wound into a cell in a manner of "anode plate-separator-cathode plate-separator".

(S2) The cell was hot-pressed, and assembled and welded with a top cover to complete the cell assembly. After that, the cell was subjected to electrolyte injection, formation, air discharge, and sealing to obtain the lithium-ion battery.

### Example 4

This example was different from Example 1 merely in the preparation of the cathode plate. Specifically, in this example, lithium cobaltate was used as the positive active material, and the compaction densities of the first coating zone 11 and the second coating zone 12 were 4.0 g/cm³ and 4.2 g/cm³, respectively.

### Example 5

This example was different from Example 1 merely in the preparation of the cathode plate. Specifically, in this example, lithium iron phosphate was used as the positive active material, and the compaction densities of the first coating zone 11 and the second coating zone 12 were 3.5 g/cm³ and 3.6 g/cm³, respectively.

### Example 6

This example was different from Example 1 merely in the preparation of the cathode plate. Specifically, in this example, lithium manganate was used as the positive active material, and the compaction densities of the first coating zone 11 and the second coating zone 12 were 2.7 g/cm³ and 3.0 g/cm³, respectively.

### Example 7

This example was different from Example 1 merely in the preparation of the cathode plate. Specifically, in this example, as shown in Fig. 2, the film coating included the first coating zone 21 and the second coating zone located on two sides of the first coating zone 21. The second coating zone included a first sub-coating zone 22 and a second sub-coating zone 23. The compaction densities of the first coating zone 21, the first sub-coating zone 22, and the second sub-coating zone 23 were 3.8 g/cm³, 3.9 g/cm³, and 4.0 g/cm³, respectively. The total width of the coating layer was 160 mm, where the widths of the first coating zone 21 the first sub-coating zone 22, and the second sub-coating zone 23 were 60 mm, 30 mm, and 20 mm respectively.

### Example 8

This example was different from Example 1 merely in the preparation of the cathode plate. Specifically, in this example, as shown in Fig. 3, the film coating included the first coating zone 31 and the second coating zone located on two sides of the first coating zone 31. The second coating zone included a first sub-coating zone 32, a second sub-coating zone 33, and a third sub-coating zone 34. The compaction densities of the first coating zone 31, the first sub-coating zone 32, the second sub-coating zone 33, and the third sub-coating zone 34 were 3.8 g/cm³, 3.9 g/cm³, 4.0 g/cm³, and 3.9 g/cm³, respectively. The total width of the coating layer was 160 mm, where the widths of the first coating zone 31, the first sub-coating zone 32, the second sub-coating zone 33, and the third sub-coating zone 34 were 60 mm, 15 mm, 20 mm, and 15 mm, respectively.

### Example 9

This example was different from Example 1 merely in the preparation of the cathode plate. Specifically, in this example, as shown in Fig. 3, the film coating included the first coating zone 31 and the second coating zone located on two sides of the first coating zone 31. The second coating zone included a first sub-coating zone 32, a second sub-coating zone 33, and a third sub-coating zone 34. The compaction densities of the first coating zone 31, the first sub-coating zone 32, the second sub-coating zone 33, and the third sub-coating zone 34 were 3.8 g/cm³, 4.0 g/cm³, 3.9 g/cm³, and 4.0 g/cm³, respectively. The total width of the coating layer was 160 mm, where the widths of the first coating zone 31, the first sub-coating zone 32, the second sub-coating zone 33, and the third sub-coating zone 34 were 60 mm, 15 mm, 20 mm, and 15 mm, respectively.

### Example 10

This example was different from Example 1 merely in the preparation of the cathode plate. Specifically, in this example, the total width of the coating layer was 160 mm, where the widths of the first coating zone 11 and the second coating zone 12 were 20 mm and 70 mm, respectively.

### Example 11

This example was different from Example 1 merely in the preparation of the cathode plate. Specifically, in this example, the total width of the coating layer was 160 mm, where the widths of the first coating zone 11 and the second coating zone 12 were 80 mm and 40 mm, respectively.

### Example 12

This example was different from Example 1 merely in the preparation of the cathode plate. Specifically, in this example, the total width of the coating layer was 160 mm, where the widths of the first coating zone 11 and the second coating zone 12 were 120 mm and 20 mm, respectively.

### Example 13

This example was different from Example 2 merely in the preparation of the anode plate. Specifically, in this example, a mixture material of graphite and silicon/silica was used as the negative active material, and the compaction densities of the first coating zone 21, the first sub-coating zone 22, and the second sub-coating zone 23 were 0.9 g/cm³, 0.95 g/cm³, and 1.0 g/cm³, respectively.

### Example 14

This example was different from Example 2 merely in the preparation of the anode plate. Specifically, in this example, lithium titanate was used as the negative active material, and the compaction densities of the first coating zone 21, the first sub-coating zone 22, and the second sub-coating zone 23 were 1.6 g/cm³, 1.7 g/cm³, and 1.8 g/cm³, respectively.

### Example 15

This example was different from Example 2 merely in the preparation of the anode plate. Specifically, in this example, as shown in Fig. 1, the film coating layer included the first coating zone 11 and the second coating zone 12 located on two sides of the first coating zone 11. The compaction densities of the first coating zone 11 and the second coating zone 12 were 0.3 g/cm³ and 1.5 g/cm³, respectively. The total width of the coating layer was 200 mm, where the widths of the first coating zone 11 and the second coating zone 12 were 80 mm and 60 mm, respectively.

### Example 16

This example was different from Example 2 merely in the preparation of the anode plate. Specifically, in this example, as shown in Fig. 3, the film coating included the first coating zone 31 and the second coating zone located on two sides of the first coating zone 31. Each of the two sides of the first coating zone 31 was provided with a first sub-coating zone 32, a second sub-coating zone 33, and a third sub-coating zone 34. The compaction densities of the first coating zone 31, the first sub-coating zone 32, the second sub-coating zone 33, and the third sub-coating zone 34 were 1.3 g/cm³, 1.4 g/cm³, 1.5 g/cm³, and 1.4 g/cm³, respectively. The total width of the coating layer was 200 mm, where the widths of the first coating zone 31, the first sub-coating zone 32, the second sub-coating zone 33, and the third sub-coating zone 34 were 80 mm, 20 mm, 20 mm, and 20 mm respectively.

### Example 17

This example was different from Example 2 merely in the preparation of the anode plate. Specifically, in this example, as shown in Fig. 3, the film coating included the first coating zone 31 and the second coating zone located on two sides of the first coating zone 31. The second coating zone included a first sub-coating zone 32, a second sub-coating zone 33, and a third sub-coating zone 34. The compaction densities of the first coating zone 31, the first sub-coating zone 32, the second sub-coating zone 33, and the third sub-coating zone 34 were 1.3 g/cm³, 1.5 g/cm³, 1.4 g/cm³, and 1.5 g/cm³, respectively. The total width of the coating layer was 200 mm, where the widths of the first coating zone 31, the first sub-coating zone 32, the second sub-coating zone 33, and the third sub-coating zone 34 were 80 mm, 20 mm, 20 mm, and 20 mm respectively.

### Example 18

This example was different from Example 2 merely in the preparation of the anode plate. Specifically, the total width of the coating layer was 200 mm, where the widths of the first coating zone 21, the first sub-coating zone 22, and the second sub-coating zone 23 were 40 mm, 40mm, and 40 mm, respectively.

### Example 19

This example was different from Example 2 merely in the preparation of the anode plate. Specifically, the total width of the coating layer was 200 mm, where the widths of the first coating zone 21, the first sub-coating zone 22, and the second sub-coating zone 23 were 100 mm, 30mm, and 20 mm, respectively.

### Example 20

This example was different from Example 2 merely in the preparation of the anode plate. Specifically, the total width of the coating layer was 200 mm, where the widths of the first coating zone 21, the first sub-coating zone 22, and the second sub-coating zone 23 were 140 mm, 20mm, and 20 mm, respectively.

### Comparative Example

### Preparation of a cathode plate

(S1) A ternary material (the positive active material), carbon black (the conductive agent) and polyvinylidene fluoride (PVDF) (the binder) were mixed in a weight ratio of 96:2.5:1.5 in N-methyl pyrrolidone (NMP) (the solvent) under stirring to form a cathode plate slurry with a solid content of 70%.

(S2) The cathode plate slurry was continuously coated onto the surface of the cathode plate current collector (aluminum foil) having a thickness of 12 µm to form a coating layer with a width of 160 mm and a compaction density of 4.0 g/cm³ with the help of an extrusion coating machine with the extrusion head gap adjusted in advance.

(S3) The cathode plate current collector coated with the coating layer was subjected to drying, rolling, die-cutting, and slitting to obtain the cathode plate.

### Preparation of an anode plate

(S1) Graphite (the negative active material), styrene-butadiene rubber (the binder), carbon black (the conductive agent), and sodium carboxymethyl cellulose (CMC-Na) (the dispersing agent) were mixed in a weight ratio of 96:1.5:1.5:1 in distilled water under stirring to form an anode plate slurry with a solid content of 45%.

(S2) The anode plate slurry was coated on the surface of an anode plate current collector (copper foil) having a thickness of 6 µm to form a coating layer having a width of 200 mm and a compaction density of 1.5g/cm³.

(S3) The anode plate current collector coated with the coating layer was subjected to drying, rolling, die-cutting, and slitting to obtain the anode plate.

### Fabrication of a lithium-ion battery

(S1) The cathode plate, the anode plate, and a separator were wound into a cell in a manner of "anode plate-separator-cathode plate-separator".

(S2) The cell was hot-pressed, and assembled and welded with a top cover to complete the cell assembly. After that, the cell was subjected to electrolyte injection, formation, air discharge, and sealing to obtain the lithium-ion battery.

### Performance tests

The cycle performance tests were performed on lithium-ion batteries obtained in Examples 1-20 and the Comparative Example under the following condition. The battery sample was subjected to an initial pressure of 3000±300 N at 25±2°C, and charged to 4.3V with a 1C current and then discharged to 2.8V with the 1C current, and this process was repeated. The capacity retention of the battery sample was recorded respectively after 600 and 1000 cycles. The test results were shown in Table 1. In addition, the comparison of the cycle performances of Example 1 and the Comparative Example was shown in Fig. 4.

**Table 1 Test results of lithium-ion batteries obtained in Examples 1-20 and the Comparative Example.**

| | Capacity retention (%) | |
|---|---|---|
| | 600 cycles | 1000 cycles |
| Example 1 | 98.6 | 92.5 |
| Example 2 | 98.3 | 92.4 |
| Example 3 | 98.9 | 92.1 |
| Example 4 | 98.1 | 92.1 |
| Example 5 | 98.0 | 92.2 |
| Example 6 | 97.6 | 91.8 |
| Example 7 | 98.8 | 93.0 |
| Example 8 | 98.6 | 92.7 |
| Example 9 | 98.7 | 92.8 |
| Example 10 | 98.3 | 92.5 |
| Example 11 | 98.6 | 92.6 |
| Example 12 | 98.7 | 92.8 |
| Example 13 | 98.1 | 92.3 |
| Example 14 | 97.9 | 92.0 |
| Example 15 | 98.0 | 92.0 |
| Example 16 | 98.1 | 92.2 |
| Example 17 | 98.1 | 92.3 |
| Example 18 | 98.0 | 92.2 |
| Example 19 | 98.4 | 92.6 |
| Example 20 | 98.6 | 92.7 |
| Comparative Example | 95.1 | 80.3 |

It could be seen from Table 1 that the coating layer in the present disclosure included a first coating zone located in the middle region of the coating layer and a second coating zone located on two sides of the first coating zone, where the compaction density of the first coating zone was smaller than that of the second coating zone. Compared with the coating layer having a uniform compaction density in the conventional pole plate, the structure of the pole plate provided in the present disclosure effectively improved the cycle performance of the battery. Specifically, by comparing Example 1 and Comparative Example, when the middle region of the cathode plate was provided with the first coating zone having a smaller compaction density, the capacity retention rate of the battery in Example 1 was slightly higher after cycling for 600 weeks and significantly higher after cycling for 1000 weeks in contrast to Comparative Example. Moreover, Fig. 4 showed that the decreasing trend of the cycle curve of Example 1 was significantly slower than that of the Comparative Example. In other words, when the middle region of the cathode plate was provided with the first coating zone having a smaller compaction density, the cycle life of the battery was effectively improved. Similarly, by comparing Example 2 and Comparative Example, when the middle region of the anode plate was provided with the first coating zone having a smaller compaction density, the cycle life of the battery was also improved. In addition, by comparing Examples 1-3, it could be seen that when the middle regions of the cathode plate and the anode plate were both provided with the first coating zone having a smaller compaction density, the cycle life of the battery was notably improved.

Moreover, by comparing Example 1 and Examples 7-9, and Example 2 and Examples 15-17, for a cathode plate or a anode plate, when multiple second coating zones were provided on one side of the first coating zone, and the compaction density of the second coating zone was reduced with the decrease in the distance to the first coating zone, the capacity retention rate of the battery was higher compared with those batteries whose cathode plate or anode plate only being provided with one second coating zone. The compaction density of the coating layer was reasonably adjusted according to the difference in the local liquid absorption capacity of the battery, which avoided the local electrolyte deficiency due to the excessive extrusion of electrolytes due to the expansion of the pole plate, thereby effectively improving the cycle performance of the battery. When a plurality of second coating zones were provided on one side of the first coating zone, and the compaction densities of the plurality of second coating zones were distributed in a high-and-low alternative manner, the cycle performance of the battery could also be improved, but the improvement effect was poorer in contrast with those batteries having the plurality of second coating zones with compaction densities being reduced with the decrease in the distance to the first coating zone.

In addition, from the comparison of Example 1 with Examples 10-12, and Example 2 with Examples 18-20, it could be seen that within the limited scope of the present disclosure, the capacity retention rate was higher when the width of the first coating zone on a cathode plate or an anode plate was larger (namely, the proportion to the total width of the coating layer was larger), namely, the improvement of the battery in view of the cycle performance was better.

In summary, by setting the first coating zone having a smaller compaction density in the middle area of the electrode, and reasonably adjusting the width and compaction density of the first coating zone and the second coating zone, the middle area of the cell is enabled to store more electrolyte, solving the problem of local electrolyte deficiency due to the over-extrusion of electrolyte from the bare cell caused by the expansion of the pole plate, thus effectively improving the cycle performance of the battery.

The above-mentioned embodiments are merely illustrative of the disclosure, and are not intended to limit the disclosure. It should be understood that all modifications, replacements, and variations made by those skilled in the art without departing from the spirit of the present disclosure shall fall within the scope of the present disclosure defined by the appended claims. Furthermore, specific terms used herein are merely for the convenience of description and are not intended to limit the present disclosure.

## Claims

1. A pole plate, comprising:
a current collector; and
a coating layer provided on at least one surface of the current collector;
**characterized in that** the coating layer comprises a first coating zone and a second coating zone; the second coating zone is arranged on two sides of the first coating zone; and a compaction density of the second coating zone is larger than a compaction density of the first coating zone.

2. The pole plate according to claim 1, **characterized in that** a ratio of the compaction density of the first coating zone to the compaction density of the second coating zone is 1:(1.001-1.5).

3. The pole plate according to claim 1, **characterized in that** the second coating zone arranged on at least one of the two sides of the first coating zone comprises a plurality of sub-coating zones varying in compaction density; and for any two adjacent sub-coating zones, a compaction density of one sub-coating zone closer to the first coating zone is smaller than that of the other sub-coating zone.

4. The pole plate according to claim 1, **characterized in that** the second coating zone arranged on at least one of the two sides of the first coating zone comprises a plurality of first sub-coating zones and a plurality of second sub-coating zones; a compaction density of the plurality of first sub-coating zones is different from that of the plurality of second sub-coating zones; and the plurality of first sub-coating zones and the plurality of second sub-coating zones are alternately arranged.

5. The pole plate according to claim 1, **characterized in that** a width of the first coating zone is 5-95% of a total width of the coating layer.

6. The pole plate according to claim 1, **characterized in that** the compaction density of the first coating zone is 0.9-4.7 g/cm³, and the compaction density of the second coating zone is 1.0-4.8 g/cm³.

7. A cell, comprising:
a cathode plate;
an anode plate; and
a separator arranged between the cathode plate and the anode plate;
**characterized in that** at least one of the cathode plate and the anode plate is formed by the pole plate according to any one of claims 1-6.

8. The cell according to claim 7, **characterized in that** the separator comprises a substrate and a functional coating layer formed on at least one surface of the substrate; the functional coating layer comprises a coating zone *a* and a coating zone *b*; the coating zone *b* is arranged on two sides of the coating zone *a*; and a compaction density of the coating zone *b* is larger than that of the coating zone *a.*

9. The cell according to claim 7, **characterized in that** the cell is a wound cell or a laminated cell.

10. A battery, comprising:
a casing; and
the cell according to claim 7;
**characterized in that** the cell is packaged in the casing.
